# EUROPEAN PATENT SPECIFICATION

(11) **EP 4 402 447 B1**
(45) Date of publication and mention of the grant of the patent: **05.11.2025**
(21) Application number: 22789676.8
(22) Date of filing: 16.09.2022
(51) Int. Cl.: G01L 5/28, G01M 17/007, B60T 17/22

(54) **DEVICE FOR TESTING A BRAKE SYSTEM**
PRÜFEINRICHTUNG FÜR EIN BREMSSYSTEM
DISPOSITIF PERMETTANT DE TESTER UN SYSTÈME DE FREINAGE

(30) Priority: 17.09.2021 BE 202105734
(43) Date of publication of application: 24.07.2024
(73) Proprietor: BEP Europe N.V., 8200 Brugge (BE)
(72) Inventor: DESMET, Yves Jeroom André, 8310 Assebroek (BE)
(74) Representative: Arnold & Siedsma
(86) International application number: PCT/IB2022/058757
(87) International publication number: WO 2023/042137

(56) References cited:
- EP-A1- 3 026 416
- DE-A1- 102011 005 935
- DE-U1- 202017 101 176
- GB-A- 1 197 623
- US-A1- 2004 000 191
- US-A1- 2012 131 994

## Description

The invention relates to a device for testing a brake system. The invention further relates to a method for testing a brake system, using such a device.

EP3026416, DE102011005935 and US2012131994 describes testing devices for testing the functionality of vehicles.

When testing passenger cars, which tests are typically performed at the end of a production line, use is typically made of a roller brake tester. The roller brake tester allows the brake system of a motor vehicle to be assessed dynamically, while the vehicle itself is in a static state. The roller brake tester comprises a mechanical floor unit with therein electric motors, two sets of two measuring rollers and a braking force measuring device.

Although the roller brake tester can perform hundreds of tests, typically braking tests, which tests may or may not differ, the roller brake tester is in practice used in sub-optimal manner.

It is an object of the invention to provide a device for testing a brake system with an improved use.

The invention provides for this purpose a device for testing a brake system and at least one driving assistance system of a vehicle. The device has a platform on which the vehicle is placeable, wherein the platform is provided with a plurality of sets of rollers wherein a respective wheel of the vehicle is positionable on each respective set of rollers, wherein the plurality of sets of rollers are driveable by a respective drive with a measuring device which is configured to measure a force exerted on the roller for the purpose of performing the test of the brake system on the vehicle, wherein the device comprises at the position of each pair of rollers an aligning means which is configured to position the vehicle at a predetermined location on the rollers so that the at least one driving assistance system can be tested.

An advantage of the invention is based on the insight that testing of a brake system can be performed in almost any position on the set of rollers. Because the device is further provided with an aligning means which positions the vehicle on the rollers at a predetermined location, the position of the vehicle on the device is controllable. This position is thus always known, i.e. the predetermined position, when the aligning means is used. This predetermined position allows testing of driving assistance systems. This predetermined position moreover also allows calibration of driving assistance systems. This is because such tests require an alignment of the vehicle in order to perform the tests and/or calibration correctly. Aligning means thus allows testing, optionally simultaneously to testing of the brake systems, of at least one driving assistance system, for instance an adaptive cruise control or lane assistance system. Testing of the driving assistance system has no or almost no effect on the testing of the brake system. In this way functionalities of the roller brake device are at least partially integrated in the device for applying vibrations. This has multiple advantages. Only one device need thus be provided instead of two different devices. Furthermore, the device takes up less space on the production floor and the device requires less intensive maintenance. A user need further purchase only one device. For this purpose each roller of the plurality of rollers is provided with a drive with a measuring device which is configured to measure a force exerted on the roller. When the passenger car sends braking signals to for instance the brake pads, the measuring device measures the forces exerted by the brake system, and the brake system of the passenger car can be tested in this way. The tests on the brake system are thus performed optimally and increase the utility of the device. The combination of testing a driving assistance system and the brake system has the further advantage that the device has a greater utility and a throughput time in a production environment is shortened.

The aligning means comprises an aligning roller which lies at an angle relative to the rollers of the corresponding set and is provided to push against a wheel during rotation of the set of rollers in order to displace the vehicle on the plurality of sets of rollers to the predetermined location. The aligning roller is rotatable relative to the aligning means and functions as rotating stop surface during rotation of the set of rollers. Not only is friction between the aligning means and the adjacent wheel considerably reduced, displacement of the vehicle on the set of rollers is also simplified. The angle is preferably at least 45°. The angle is preferably smaller than 90°. This allows damage to rims of the wheels to be prevented.

The aligning roller preferably extends upward between the set of rollers. The wheels of the vehicle are situated on the set of rollers and are centred therebetween by the rollers. Because the aligning roller extends upward between the rollers, the aligning roller can be positioned adjacently of the wheel and be pushed against the wheel of the vehicle in simple manner. More specifically, the aligning roller can push against the tyre of the wheel.

The aligning means preferably comprises a rail wherein the aligning roller is arranged displaceably on the rail between each set of rollers. On one hand, this allows vehicles of different widths to be aligned at the predetermined position on the same device. The rail and the set of rollers are oriented transversely relative to a longitudinal direction of the vehicle. In other words, the rail is oriented along a width direction of the vehicle. The rail lies substantially parallel to an axis of the set of rollers. The length of the rail thus determines a distance over which the aligning means is displaceable. The rail therefore also determines how far the vehicle is displaceable over the rollers, as seen in the width of the vehicle. On the other hand, it also allows the vehicle to actively move on the set of rollers.

The aligning means is preferably displaceable over a distance, as seen in a longitudinal direction, of at least 100 mm, preferably at least 600 mm.

The device preferably comprises a control device which is configured to place the vehicle on the rollers at the predetermined location by having the aligning rollers move inward from an outer position, wherein the set of rollers are driven for inward movement of the rollers. In this way a width of the vehicle which is placed on the rollers need hardly be taken into consideration. By having the rollers move from the outside inward the aligning rollers will automatically push against the wheels of the vehicle and align them with the device, or vice versa. Even in a situation wherein the vehicle is initially placed on the device eccentrically to considerable extent, this vehicle will be aligned with the device in simple manner by having the rollers move from the outside inward. Only contact with the wheels on one side of the vehicle is here necessary initially.

The set of rollers are preferably turning at a minimum speed before the control device pushes the aligning rollers against the wheels. This simplifies displacement of the vehicle on the set of rollers and avoids damage to the tyres and the set of rollers.

The device preferably further comprises a communication interface which is configured to communicate with a vehicle control system of the vehicle, and the aligning means further preferably comprises a distance measuring device and a steering device. The distance measuring device is configured to measure a distance between the wheel and an aligning position, and the steering device is configured to steer the vehicle via the communication interface, all this such that the measured distance corresponds with a predetermined value which corresponds with the predetermined position.

According to a further aspect, the invention provides a method for testing a brake system and at least one driving assistance system of a vehicle, using such a device, the method comprising of
- a first status wherein the vehicle is located on the rollers;
- a second status wherein the vehicle is positioned at the predetermined location on the rollers via the aligning means, wherein at least the driving assistance system is tested in the second status.
Testing of the brake system can be performed in the first status of the method. The first status is an initial status of placing the vehicle on the rollers. The second status is a follow-on status wherein the vehicle is positioned on the device in order to also test the at least one driving assistance system. Performing the method in two steps is simpler and does not take up any considerable amount of time. Advantages of the device are further similarly applicable to the method for testing a brake system, *mutatis mutandis.*

The aligning rollers are preferably initially in an outer position, wherein after the rollers are driven the aligning rollers move inward in order to place the car in the predetermined position.

The rollers are preferably turning at a minimum speed before the aligning rollers are pushed against the wheels.

The invention will now be further described on the basis of an exemplary embodiment shown in the drawing.

In the drawing:
figure 1 is a top view of a device according to an exemplary embodiment;
figure 2A is a top view of a set of rollers shown in figure 1 on which a wheel is arranged and against which an aligning roller pushes;
figure 2B is a side view as seen in a plane perpendicularly of the axes of the set of rollers shown in figure 2A;
figure 2C is a front view of the set shown in figure 2A;
figure 3 is a side view of a set of rollers with an aligning roller according to a further exemplary embodiment.

The following detailed description relates to determined specific embodiments. The teaching hereof can however be applied in different ways. The same or similar elements are designated in the drawings with the same reference numerals.

The present invention will be described with reference to specific embodiments. The invention is however not limited thereto, but solely by the claims.

As used here, the singular forms "a" and "the" comprise both the singular and plural references, unless clearly indicated otherwise by the context.

The terms "comprising", "comprises" and "composed of" as used here are synonymous with "including". The terms "comprising", "comprises" and "composed of" when referring to stated components, elements or method steps also comprise embodiments which "consist of" the components, elements or method steps.

The terms first, second, third and so on are further used in the description and in the claims to distinguish between similar elements and not necessarily to describe a sequential or chronological order, unless this is specified. It will be apparent that the thus used terms are mutually interchangeable under appropriate circumstances and that the embodiments of the invention described here can operate in an order other than described or illustrated here.

Reference in this specification to "one embodiment", "an embodiment", "some aspects", "an aspect" or "one aspect" means that a determined feature, structure or characteristic described with reference to the embodiment or aspect is included in at least one embodiment of the present invention. The manifestations of the sentences "in one embodiment", "in an embodiment", "some aspects", "an aspect" or "one aspect" in different places in this specification thus do not necessarily all refer to the same embodiment or aspects. As will be apparent to a skilled person in this field, the specific features, structures or characteristics can further be combined in any suitable manner in one or more embodiments or aspects. In the appended claims all features of the claimed embodiments or aspects can for instance be used in any combination.

In the context of the application a wheel of a vehicle is defined as a component on which a vehicle travels over the ground surface. In the context of the application the wheel can comprise a rim on which a tyre is mounted.

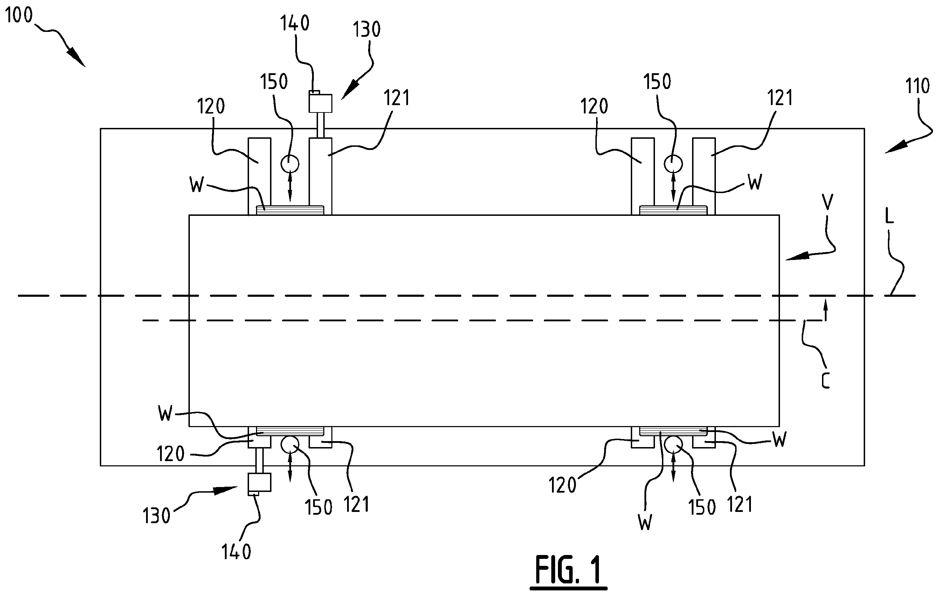

Figure 1 shows a top view of a device 100 for testing a brake system and at least one driving assistance system of a vehicle.

Device 100 comprises a platform 110 on which the vehicle V is placeable. The platform 110 can be situated at a height, for instance when platform 110 is supported by a frame. Platform 110 is preferably provided at the same height as a floor over which the passenger car V can travel. This simplifies placing of the passenger car V on the platform and speeds up a throughput time of the passenger car in the production line.

Platform 110 is provided with a plurality of sets of rollers 120, 121. Four sets of rollers 120, 121 are provided in figure 1. It will however be apparent that it is possible according to a preferred embodiment for only two sets of rollers to be provided. A platform 110 which is provided with two sets of rollers provides a cost-efficient solution for testing the brake system of the vehicle. In this way the device 100 can also have a more compact construction.

A set of rollers 120, 121 comprises at least two respective rollers. The two rollers 120, 121 are provided in pairs. Each respective set of rollers 120, 121 is provided so that a respective wheel of the vehicle is positionable. In the illustrated exemplary embodiment of figure 1 four sets of rollers are provided, on which both the front and rear wheels W of the vehicle V are supported. The respective rollers 120, 121 are rotatable about an axis. The axes of the rollers 120, 121 of a set of rollers preferably lie parallel and at the same height relative to each other. In this way the wheels W are centred between the set of rollers. The set of rollers can optionally comprise a third roller (not shown) which is positioned such that it can detect slipping of the wheel between the two rollers.

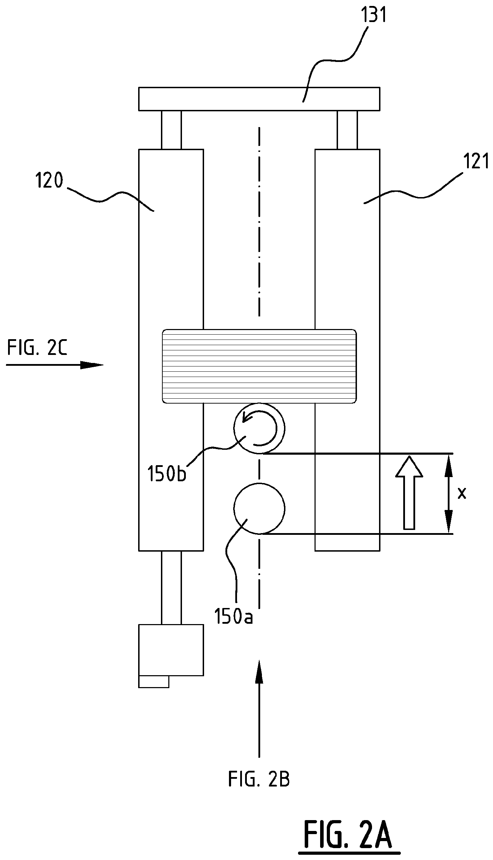

The plurality of sets of rollers 120, 121 are driveable by a respective drive 130 with a measuring device 140 which is configured to measure a force exerted on the roller for the purpose of performing the test of the brake system on the vehicle V. In other words, each set of rollers 120, 121 with which one wishes to perform brake tests is driven by at least one internal drive. As shown in figure 1, it is not necessary for each set of rollers to be driven internally. The rear set of rollers in figure 1 are thus for instance not provided with a drive. The rear set of rollers can be driven by an external drive, for instance by the rear wheels of the vehicle itself. This is economically advantageous when for instance only front or only rear wheel-driven vehicles need be tested. Drive 130 is provided to make the set of rollers rotate synchronously, for which purpose a coupling 131 can be provided between the rollers of the set of rollers, see figure 2A. Such couplings are known to the skilled person and are therefore not further elucidated for the sake of brevity of the application.

Device 100 comprises at the position of each pair of rollers 120, 121 an aligning means 150 which is configured to position the vehicle V at a predetermined location L on the rollers so that the at least one driving assistance system can be tested. An advantage of device 100 is based on the insight that testing of a brake system can be performed in almost any position on the set of rollers. The whole width of the set of rollers can be used for this purpose. Because device 100 is further provided with an aligning means 150 which positions the vehicle V at a predetermined location L on the rollers, the position C of the vehicle on device 100 is controllable. This predetermined position L allows testing of driving assistance systems. The predetermined position L is shown in the figure as a central position on device 100. It will however be apparent that the predetermined position need not necessarily be central, but can also be determined eccentrically relative to device 100. The actual position of the vehicle V is shown in the figure with designating reference C. This position C is known after use of the aligning means 150. The aligning means 150 allows the position C of vehicle V to substantially coincide with the predetermined position L on device 100 and the vehicle to be aligned in this way. This is because testing of a driving assistance system requires an alignment of the vehicle V in order to perform the tests correctly. Testing of a driving assistance system also comprises of calibrating such a driving assistance system. Aligning means 150 thus further also allows testing, optionally simultaneously to testing of the brake systems, of at least one driving assistance system, for instance an adaptive cruise control or lane assistance system such as lane change warning, lane departure warning and front-view camera. Testing of the driving assistance system has no or almost no effect on the testing of the brake system because testing of the brake system can be performed independently of the position C of the vehicle V on device 100. The combination of testing a driving assistance system and the brake system provides a device 100 with a greater utility. A throughput time in a production environment can further be shortened.

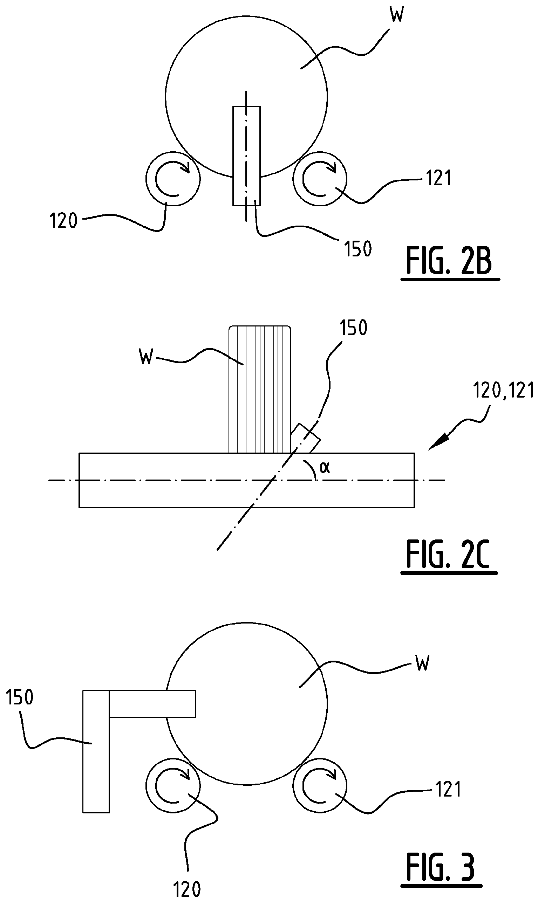

Aligning means 150 preferably comprises an aligning roller which lies at an angle relative to the rollers 120, 121 from the corresponding set. The aligning roller is provided to push against a wheel during rotation of the set of rollers 120, 121 in order to displace the vehicle on the plurality of sets of rollers to the predetermined location. The aligning roller can also push against only a portion of the wheel, for instance a tyre. In the figure the aligning roller pushes against an outer side of the wheel of the vehicle. Alternatively, the aligning roller can also push against an inner side of the wheel of the vehicle. The aligning roller is rotatable relative to the aligning means and functions as rotating stop surface during rotation of the set of rollers. Not only is friction between aligning means 150 and the wheel W adjacently thereof considerably reduced, displacement of the vehicle V on the set of rollers is also simplified. The angle of the aligning roller relative to the corresponding set of rollers is further discussed with reference to figures 2B and 2C.

Alternatively or in combination, the device further comprises a communication interface (not shown) which is configured to communicate with a vehicle control system of the vehicle. In such a preferred embodiment the aligning means further comprises a distance measuring device and a steering device, wherein the distance measuring device is configured to measure a distance between the wheel and an aligning position. The steering device is configured to steer the vehicle via the communication interface, all this such that the measured distance corresponds with a predetermined value which corresponds with the predetermined position. Recent developments in the automotive industry allow for the steering device to steer the vehicle, i.e. turn the wheels relative to a ground surface. When the rollers rotate, such a steering movement will urge the vehicle over the surface of the rollers. The vehicle is thus also displaceable over the rollers without said rollers. In order to align the vehicle the distance between the wheel, this wheel typically lying adjacently of a maximum outer dimension of the vehicle, relative to an aligning position is measured. The aligning position can for instance be the edge of the device or a centre line of the device. The skilled person will appreciate that such an aligning position can be positioned at different locations of the device. The measured distance is then used to displace the vehicle to the left or to the right over the rollers in order to have the measured distance correspond with a predetermined value. Such a predetermined value corresponds with or, in other words, is representative of the predetermined position. It will be apparent to the skilled person that the predetermined value depends on the vehicle, for instance on a width thereof. The steering device controls the vehicle control system on the basis of the measured distance so that the vehicle is aligned on the device.

Aligning means 150 preferably comprises a rail (not shown). The aligning roller is displaceable on the rail and is arranged between each set of rollers. The rail is a linear guide which is positioned between the set of rollers and extends substantially parallel, as seen in a longitudinal direction of the set of rollers, to the set of rollers over at least a portion of the width of the device 100. The linear guide limits the freedom of movement of the aligning means so that the aligning means is freely displaceable in at least the width direction of device 100. On one hand, this allows vehicles of different widths to be aligned at the predetermined position on the same device. This is because the displaceability of the aligning roller allows a distance between the wheel and the aligning roller to be bridged. On the other hand, this also allows the vehicle V to actively move on the set of rollers, in the illustrated exemplary embodiment of figure 1 the lower aligning means 150 push against the wheels in order to displace the location C of vehicle V so that the vehicle is positioned at the predetermined location L.

Figure 2A shows a schematic top view of a set of rollers 120, 121 shown in figure 1. Figure 2A further shows the viewing directions for figures 2B and 2C using arrows with corresponding designation. In figures 2A, 2B and 2C the same or similar elements are designated with the same reference numerals as in figure 1. Reference numeral 150 is used in the figures to designate the aligning roller.

Figure 2A more specifically shows that the aligning roller 150 is displaceable over the rail over a distance X. The aligning roller 150 is arranged between the set of rollers 120, 121. Aligning roller 150 is initially positioned in an outer position, designated with reference numeral 150a. Aligning roller 150 is then moved inward. An inner position is designated with reference numeral 150b. The inner position is designated in the figure as an intermediate position, i.e. between two outer ends of the rollers. It will be apparent that the inner position can also be positioned at the coupling 131. Each intermediate position can be an end position, depending on the width of the vehicle. For this purpose the device is provided with a control device which is configured to place the vehicle at the predetermined location on the rollers by having the aligning rollers move inward from an outer position, wherein the set of rollers are driven to move the rollers inward. In this way a width of the vehicle need hardly be taken into consideration. In other words, the device can thus facilitate vehicles of different widths. By having the aligning rollers 150 move from the outside inward the aligning rollers 150 will automatically push against the wheels of the vehicles and align them with the device. Even in a situation wherein the vehicles are initially placed on the device eccentrically to considerable extent, see for instance figure 1, these vehicles are aligned with the device in simple manner by having the rollers move from the outside inward. Only contact with the wheels on one side of the vehicle is here necessary initially. The aligning means is preferably displaceable over a distance X, as seen in a longitudinal direction of the rollers, of at least 100 mm, preferably at least 600 mm.

The driving of the rollers is shown in figure 2B, which figure is a side view of the set of rollers according to figure 2A. The set of rollers 120, 121 are preferably turning at a minimum speed before the control device pushes the aligning rollers against the wheels. This simplifies displacement of the vehicle on the set of rollers and avoids damage to the tyres and the set of rollers. Figure 2B shows a preferred embodiment wherein the aligning roller 150 extends upward between the set of rollers 120, 121. The wheels of the vehicle are located on the set of rollers and are centred therebetween by the rollers 120, 121. Because the aligning roller extends upward between the rollers, the aligning roller can be positioned adjacently of the wheel and be pushed against the wheel of the vehicle in simple manner. Compared to the exemplary embodiment shown in figure 3, the aligning roller extends beyond the rollers to only limited extent, and in this way the bodywork of the car on the device cannot become damaged. The aligning roller extends between the rollers with substantially upward orientation. As shown in the figure, the aligning roller extends beyond the outer surfaces of the rollers. The aligning roller can alternatively or in combination extend over a maximum distance which corresponds with a height-width ratio of the adjacent tyre of the vehicle. In other words, the portion of the aligning roller which comes into contact with the tyre extends at most up to the wheel rim of the vehicle. In this way the aligning roller does not extend beyond the rubber part of the tyre of the vehicle, and the aligning roller does not damage the rims during displacement of the vehicle.

Figure 2C shows a side view of the rollers in figure 2A. Figure 2C more specifically shows that the aligning roller 130 has an angle α with the rollers. The angle α is measured between an axis of the roller and an axis of the aligning roller 150. The angle is preferably at least 45°. The angle is further preferably smaller than 90°.

Figure 3 shows that the aligning roller 150 can also extend above the set of rollers 120, 121 adjacently thereof. The illustrated exemplary embodiment has the advantage that more space is provided between the rollers 120, 121, for instance for providing a third roller.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

## Claims

1. A device (100) for testing a brake system and at least one driving assistance system of a vehicle, which device has a platform (110) on which the vehicle is placeable, wherein the platform is provided with a plurality of sets of rollers (120, 121) wherein a respective wheel of the vehicle is positionable on each respective set of rollers, wherein the plurality of sets of rollers are driveable by a respective drive with a measuring device (140) which is configured to measure a force exerted on the roller for the purpose of performing the test of the brake system on the vehicle, wherein the device comprises at the position of each set of rollers an aligning means (150) which is configured to position the vehicle at a predetermined location on the rollers so that the at least one driving assistance system can be tested, wherein the aligning means (150) comprises an aligning roller which lies at an angle relative to the rollers of the corresponding set and **characterized in that** the aligning roller is provided to push against a wheel during rotation of the set of rollers in order to displace the vehicle on the plurality of sets of rollers to the predetermined location.

2. The device (100) according to the foregoing claim, wherein the aligning roller extends upward between the set of rollers.

3. The device according to any one of the foregoing claims, wherein the aligning means comprises a rail wherein the aligning means is arranged displaceably on the rail between each set of rollers.

4. The device (100) according to the foregoing claim, wherein the aligning means is displaceable over a distance, as seen in a longitudinal direction, of at least 100 mm, preferably at least 600 mm.

5. The device (100) according to any one of the claims 1-4, wherein the angle is at least 45° and the angle is preferably smaller than 90°.

6. The device (100) according to any one of the foregoing claims, further comprising a control device which is configured to place the vehicle on the rollers at the predetermined location by having the aligning rollers move inward from an outer position, wherein the set of rollers are driven for inward movement of the rollers.

7. The device (100) according to the foregoing claim, wherein the set of rollers are turning at a minimum speed before the control device pushes the aligning rollers against the wheels.

8. The device (100) according to any one of the foregoing claims, further comprising a communication interface which is configured to communicate with a vehicle control system of the vehicle, wherein the aligning means further comprises a distance measuring device and a steering device, wherein the distance measuring device is configured to measure a distance between the wheel and an aligning position, and the steering device is further configured to steer the vehicle via the communication interface, all this such that the measured distance corresponds with a predetermined value which corresponds with the predetermined position.

9. Method for testing a brake system and at least one driving assistance system of a vehicle using a device according to any one of the previous claims, the method comprising of
- a first status wherein the vehicle is located on the plurality of sets of rollers;
- a second status wherein the vehicle is positioned at the predetermined location on the plurality of sets of rollers via the aligning means, wherein at least the driving assistance system is tested in the second status.

10. Method according to the foregoing claim, wherein the aligning means are initially in an outer position and wherein, after the sets of rollers are driven, the aligning means move inward in order to place the car in the predetermined position.

11. Method according to any one of the claims 9-10, wherein the sets of rollers are turning at a minimum speed before the aligning rollers are pushed against the wheels.

## Patentansprüche

1. Vorrichtung (100) zum Testen eines Bremssystems und mindestens eines Fahrassistenzsystems eines Fahrzeugs, wobei die Vorrichtung eine Plattform (110) aufweist, auf der das Fahrzeug platzierbar ist, wobei die Plattform mit einer Vielzahl von Sätzen von Rollen (120, 121) versehen ist, wobei ein jeweiliges Rad des Fahrzeugs auf jedem jeweiligen Satz von Rollen positionierbar ist, wobei die Vielzahl von Sätzen von Rollen durch einen jeweiligen Antrieb mit einer Messvorrichtung (140) antreibbar sind, die konfiguriert ist, um eine auf die Rolle ausgeübte Kraft zum Zwecke eines Durchführens des Tests des Bremssystems auf dem Fahrzeug zu messen, wobei die Vorrichtung an der Position jedes Satzes von Rollen ein Ausrichtmittel (150) umfasst, das konfiguriert ist, um das Fahrzeug an einer zuvor bestimmten Stelle auf den Rollen zu positionieren, sodass das mindestens eine Fahrassistenzsystem getestet werden kann, wobei das Ausrichtmittel (150) eine Ausrichtrolle umfasst, die in einem Winkel relativ zu den Rollen des entsprechenden Satzes liegt und **dadurch gekennzeichnet ist, dass** die Ausrichtrolle bereitgestellt ist, um während einer Rotation des Satzes von Rollen gegen ein Rad zu drücken, um das Fahrzeug auf der Vielzahl von Sätzen von Rollen an die zuvor bestimmte Stelle zu verschieben.

2. Vorrichtung (100) nach dem vorstehenden Anspruch, wobei sich die Ausrichtrolle zwischen dem Satz von Rollen nach oben erstreckt.

3. Vorrichtung nach einem der vorstehenden Ansprüche, wobei das Ausrichtmittel eine Schiene umfasst, wobei das Ausrichtmittel zwischen jedem Satz von Rollen auf der Schiene verschiebbar angeordnet ist.

4. Vorrichtung (100) nach dem vorstehenden Anspruch, wobei das Ausrichtmittel, in einer Längsrichtung gesehen, über eine Entfernung von mindestens 100 mm, vorzugsweise mindestens 600 mm, verschiebbar ist.

5. Vorrichtung (100) nach einem der Ansprüche 1 bis 4, wobei der Winkel mindestens 45° beträgt und der Winkel vorzugsweise kleiner als 90° ist.

6. Vorrichtung (100) nach einem der vorstehenden Ansprüche, ferner umfassend eine Steuervorrichtung, die konfiguriert ist, um das Fahrzeug an der zuvor bestimmten Stelle auf den Rollen dadurch zu platzieren, dass die Ausrichtrollen veranlasst werden, sich von einer äußeren Position nach innen zu bewegen, wobei der Satz von Rollen für eine nach innen gerichtete Bewegung der Rollen angetrieben wird.

7. Vorrichtung (100) nach dem vorstehenden Anspruch, wobei sich der Satz von Rollen mit einer Mindestgeschwindigkeit dreht, bevor die Steuervorrichtung die Ausrichtrollen gegen die Räder drückt.

8. Vorrichtung (100) nach einem der vorstehenden Ansprüche, ferner umfassend eine Kommunikationsschnittstelle, die konfiguriert ist, um mit einem Fahrzeugsteuersystem des Fahrzeugs zu kommunizieren, wobei das Ausrichtmittel ferner eine Entfernungsmessvorrichtung und eine Lenkvorrichtung umfasst, wobei die Entfernungsmessvorrichtung konfiguriert ist, um eine Entfernung zwischen dem Rad und einer Ausrichtposition zu messen, und die Lenkvorrichtung ferner konfiguriert ist, um das Fahrzeug über die Kommunikationsschnittstelle zu lenken, all dies derart, dass die gemessene Entfernung einem zuvor bestimmten Wert entspricht, der der zuvor bestimmten Position entspricht.

9. Verfahren zum Testen eines Bremssystems und mindestens eines Fahrassistenzsystems eines Fahrzeugs unter Verwendung einer Vorrichtung nach einem der vorstehenden Ansprüche, das Verfahren umfassend
- einen ersten Status, wobei sich das Fahrzeug auf der Vielzahl von Sätzen von Rollen befindet;
- einen zweiten Status, wobei das Fahrzeug über das Ausrichtmittel an der zuvor bestimmten Stelle auf der Vielzahl von Sätzen von Rollen positioniert ist, wobei in dem zweiten Status mindestens das Fahrassistenzsystem getestet wird.

10. Verfahren nach dem vorstehenden Anspruch, wobei die Ausrichtmittel zunächst in einer äußeren Position sind und wobei sich die Ausrichtmittel, nachdem die Sätze von Rollen angetrieben werden, nach innen bewegen, um das Auto in die zuvor bestimmte Position zu platzieren.

11. Verfahren nach einem der Ansprüche 9 bis 10, wobei sich die Sätze von Rollen mit einer Mindestgeschwindigkeit drehen, bevor die Ausrichtrollen gegen die Räder gedrückt werden.

## Revendications

1. Dispositif (100) permettant de tester un système de freinage et au moins un système d'assistance à la conduite d'un véhicule, le dispositif a une plate-forme (110) sur laquelle le véhicule peut être placé, dans lequel la plate-forme est pourvue d'une pluralité d'ensembles de rouleaux (120, 121), dans lequel une roue respective du véhicule peut être positionnée sur chaque ensemble respectif de rouleaux, dans lequel la pluralité d'ensembles de rouleaux peuvent être entraînés par un entraînement respectif avec un dispositif de mesure (140) qui est configuré pour mesurer une force exercée sur le rouleau dans le but d'effectuer le test du système de freinage sur le véhicule, dans lequel le dispositif comprend, au niveau de la position de chaque ensemble de rouleaux, un moyen d'alignement (150) qui est configuré pour positionner le véhicule au niveau d'un emplacement prédéterminé sur les rouleaux de sorte que l'au moins un système d'assistance à la conduite puisse être testé, dans lequel le moyen d'alignement (150) comprend un rouleau d'alignement qui se trouve à un angle par rapport aux rouleaux de l'ensemble correspondant et **caractérisé en ce que** le rouleau d'alignement est prévu pour pousser contre une roue pendant la rotation de l'ensemble de rouleaux afin de déplacer le véhicule sur la pluralité d'ensembles de rouleaux vers l'emplacement prédéterminé.

2. Dispositif (100) selon la revendication précédente, dans lequel le rouleau d'alignement s'étend vers le haut entre l'ensemble de rouleaux.

3. Dispositif selon l'une quelconque des revendications précédentes, dans lequel le moyen d'alignement comprend un rail, dans lequel le moyen d'alignement est disposé de manière déplaçable sur le rail entre chaque ensemble de rouleaux.

4. Dispositif (100) selon la revendication précédente, dans lequel le moyen d'alignement peut se déplacer sur une distance, tel que vue dans une direction longitudinale, d'au moins 100 mm, de préférence d'au moins 600 mm.

5. Dispositif (100) selon l'une quelconque des revendications 1 à 4, dans lequel l'angle est d'au moins 45 ° et l'angle est de préférence inférieur à 90 °.

6. Dispositif (100) selon l'une quelconque des revendications précédentes, comprenant en outre un dispositif de commande configuré pour placer le véhicule sur les rouleaux au niveau de l'emplacement prédéterminé en déplaçant les rouleaux d'alignement vers l'intérieur à partir d'une position externe, dans lequel l'ensemble de rouleaux est entraîné pour un déplacement vers l'intérieur des rouleaux.

7. Dispositif (100) selon la revendication précédente, dans lequel l'ensemble de rouleaux tourne à une vitesse minimale avant que le dispositif de commande ne pousse les rouleaux d'alignement contre les roues.

8. Dispositif (100) selon l'une quelconque des revendications précédentes, comprenant en outre une interface de communication qui est configurée pour communiquer avec un système de commande de véhicule du véhicule, dans lequel le moyen d'alignement comprend en outre un dispositif de mesure de distance et un dispositif de direction, dans lequel le dispositif de mesure de distance est configuré pour mesurer une distance entre la roue et une position d'alignement, et le dispositif de direction est en outre configuré pour diriger le véhicule par l'intermédiaire de l'interface de communication, tout cela de telle sorte que la distance mesurée corresponde à une valeur prédéterminée qui correspond à la position prédéterminée.

9. Procédé permettant de tester un système de freinage et au moins un système d'assistance à la conduite d'un véhicule à l'aide d'un dispositif selon l'une quelconque des revendications précédentes, le procédé comprenant
- un premier état dans lequel le véhicule se trouve sur la pluralité d'ensembles de rouleaux ;
- un second état dans lequel le véhicule est positionné au niveau de l'emplacement prédéterminé sur la pluralité d'ensembles de rouleaux par l'intermédiaire du moyen d'alignement, dans lequel au moins le système d'assistance à la conduite est testé dans le second état.

10. Procédé selon la revendication précédente, dans lequel le moyen d'alignement se trouve initialement dans une position externe et dans lequel, après l'entraînement des ensembles de rouleaux, le moyen d'alignement se déplace vers l'intérieur afin de placer la voiture dans la position prédéterminée.

11. Procédé selon l'une quelconque des revendications 9 à 10, dans lequel les ensembles de rouleaux tournent à une vitesse minimale avant que les rouleaux d'alignement ne soient poussés contre les roues.
